# DEMANDE DE BREVET EUROPEEN

(11) **EP 1 411 221 A2**
(43) Date de publication de la demande: **21.04.2004**
(21) Numéro de dépôt: 03292597.6
(22) Date de dépôt: 17.10.2003
(51) Int. Cl.: F02B 19/12

(54) **Dispositif d'allumage à préchambre pour un moteur à combustion interne**

(30) Priorité: 18.10.2002 FR 0213020
(71) Demandeur: Peugeot Citroen Automobiles SA, 92200 Neuilly sur Seine (FR)
(72) Inventeur: Tourteaux, Nicolas, 92500 Rueil Malmaison (FR); Robinet, Cyril, 91430 Igny (FR)
(74) Mandataire: Jupin, Claude Christian Marie

(57) **Abrégé**

Dispositif d'allumage à préchambre pour moteur à combustion interne comportant une chambre de combustion principale (1) délimitée par une paroi interne de culasse (10) avec un toit (10b) et un système de compression (P) avec une tête de piston, une préchambre (2) disposée sur le toit de la culasse et destinée à recevoir un mélange combustible avec un système d'allumage (13, 14) dudit mélange combustible, la préchambre étant définie par un corps de préchambre (12) comportant une tête (12a) et communiquant avec la chambre de combustion principale par au moins un passage (15) ménagé dans la tête. Selon l'invention, (ou les) passage(s) (15) est (sont) disposé(s) et orienté(s) dans la tête (12a) de préchambre de telle sorte qu'aucun du (ou des) jet(s) de flamme et/ou de composés instables issu(s) du (ou des) passages (15) lors de la combustion du mélange combustible dans la préchambre (2) n'atteigne directement le toit (10b) de culasse et les jets ont un libre parcours supérieur à la distance minimale entre la tête de préchambre et la tête de piston.

## Description

La présente invention se rapporte à un dispositif et un procédé d'allumage à préchambre pour moteur à combustion interne, ainsi qu'à l'optimisation de la configuration des passages entre la préchambre et la chambre de combustion.

Les moteurs à combustion interne à allumage commandé font l'objet d'efforts conséquents afin de réduire la consommation de carburant, les émissions polluantes et l'irrégularité cyclique. Il a ainsi été proposé d'utiliser des dispositifs aptes à initier la combustion du mélange air-carburant contenu dans la chambre de combustion d'un moteur à combustion interne, par l'auto-inflammation de ce mélange.

Cette technologie est à classer parmi les systèmes à préchambre, cette dernière pouvant être insérée en lieu et place d'une bougie conventionnelle : l'auto-inflammation du mélange air-carburant est réalisée grâce à l'injection dans la chambre principale, de composés instables provenant de la préchambre.

Dans le cas classique de l'utilisation d'une bougie, on constate l'existence de dispersions importantes de richesse et de teneur en produits de combustion résiduels, ces dispersions étant à l'origine de l'irrégularité cyclique de combustion apparaissant notamment lors du fonctionnement du moteur à faible charge. Ces dispersions diminuent lorsque l'on utilise un système à préchambre, les gains obtenus en terme d'irrégularité cyclique provenant du fait que la probabilité d'atteindre une zone inflammable augmente avec un tel système.

On connaît par les documents US-4.248.189, FR-2.814.288A, DE-44.04.899A et US-5.947.076 des dispositifs d'allumage à préchambre avec allumeur pour moteur à combustion interne comprenant des électrodes d'allumage dans la préchambre.

L'allumeur comprend en outre un passage d'introduction d'un mélange combustible dans la préchambre.

L'inflammation du mélange combustible dans la chambre de combustion principale se fait par propagation d'un front de flamme de la préchambre à la chambre principale au moyen de passages ménagés dans la paroi de la préchambre séparant la préchambre de la chambre de combustion principale.

La demande de brevet français FR- 2.781.840 décrit un dispositif d'allumage de moteur à combustion interne comprenant :
- une chambre principale destinée à contenir un mélange combustible principal et muni d'un système de compression dudit mélange,
- une préchambre destinée à recevoir des réactifs et communiquant avec la chambre principale par des orifices pratiqués dans une paroi séparant la chambre principale de la préchambre,
- un système d'allumage des réactifs contenus dans la préchambre.

Dans un tel dispositif qui donne globalement satisfaction, les passages entre la préchambre et la chambre principale sont des orifices de faible diamètre aptes à empêcher le passage d'un front de flamme tout en permettant le passage des composés instables provenant de la combustion des réactifs contenus dans la préchambre. Le système de compression de la chambre principale et l'ensemencement du mélange principal en les composés instables permettent une auto-inflammation en masse du mélange principal. En effet, la disposition des orifices dans la paroi de séparation est configurée de telle sorte que l'ensemencement en composés instables du mélange principal est sensiblement homogène dans la chambre principale. Dès lors, la combustion du mélange principale est initiée en de multiples sites par ensemencement et compression du mélange principal.

L'utilisation de nombreux conduits de faible diamètre présente l'avantage, pour certains modes de fonctionnement tels que le mode stratifié ou le mode homogène à la stoechiométrie, d'augmenter la section efficace de la paroi de séparation : il en résulte une diminution de la différence de pression entre la préchambre et la chambre principale. En conséquence, les composés instables sont éjectés à faible distance de la paroi de séparation entre la préchambre et la chambre principale, et la probabilité que ces composés soient conservés à proximité de la paroi et s'y accumulent est grand.

La demande de brevet FR 2.810.692 concerne un perfectionnement aux dispositifs d'allumage de la demande FR-2.781.840 selon lequel, les orifices ménagés dans la paroi séparant la préchambre de la chambre principale sont circonscrits par une courbe circulaire de diamètre d₂ passant par le centre des orifices les plus extérieurs. Cette courbe de diamètre d₂ est circulaire au sens pratique du terme, et non pas au sens mathématique du terme. Le rapport de la valeur dudit diamètre d₂ sur la valeur du diamètre intérieur de la préchambre est inférieur ou égal à 1/2, de préférence inférieur ou égal à 1/3.

Cette disposition des orifices permet d'améliorer les conditions d'auto-inflammation du mélange principal, en particulier lors du fonctionnement du moteur avec un faible volume d'air carburant.

On a déterminé, selon l'invention, que lorsque la distance de parcours des jets issus des passages entre la préchambre et la chambre de combustion principale, avant impact contre la face supérieure du piston et/ou la paroi interne de la culasse, est courte, il en résultait des problèmes de fonctionnement du moteur.

Ainsi, dans le cas d'une préchambre dont les passages ont un diamètre égal ou inférieur à 1 mm et ne permettent pas la propagation d'un front de flamme, si la distance de parcours des jets d'ensemencement en composés instables, avant impact sur le piston et/ou la culasse, est courte, l'impact sur le piston et/ou la culasse est violent provoquant un arrachement de la couche limite thermique et donc une augmentation des transferts thermiques aux parois et un piégeage des composés instables (radicaux) et donc une moindre efficacité au niveau de l'auto-inflammation. Au final, on observe une diminution du couple moteur due à l'augmentation du transfert thermique aux parois et des phénomènes d'instabilité à faibles charges dus au piégeage des composés instables.

Dans le cas d'une préchambre dont les passages ont un diamètre supérieur à 1 mm et permettent la propagation d'un front de flamme, si la distance de parcours du jet de flamme, avant impact sur le piston et/ou la culasse, est courte, l'impact du jet de flamme sur le piston ou la culasse est violent provoquant un arrachement de la couche limite thermique et donc une augmentation des transferts thermiques aux parois se traduisant finalement comme précédemment par une diminution du couple moteur.

L'invention a donc pour objet un dispositif d'allumage à préchambre pour moteur à combustion interne qui remédie aux inconvénients ci-dessus.

Selon l'invention le dispositif d'allumage pour moteur à combustion interne comprend :
- une chambre de combustion principale définie en partie par une paroi interne de culasse avec un toit de culasse et munie d'un système de compression (P) d'un mélange combustible principal à type de piston avec une tête de piston, le système de compression (P) étant mobile dans la culasse et la tête du piston étant sensiblement à l'opposé du toit de culasse;
- une préchambre disposée sur le toit de la culasse et destinée à recevoir un mélange combustible, la préchambre étant définie par un corps de préchambre comportant une tête de préchambre séparant la préchambre de la chambre de combustion principale et communiquant avec la chambre de combustion principale par au moins un passage ménagé dans la tête de préchambre ;
- un système d'allumage du mélange combustible contenu dans la préchambre.

Selon l'invention, le (ou les) passage(s) est (sont) disposé(s) et orienté(s) dans la tête de préchambre de telle sorte qu'aucun du (ou des) jet(s) de flamme et/ou de composés instables issu(s) du (ou des) passages lors de la combustion du mélange combustible dans la préchambre n'atteigne directement le toit de culasse.

Dans divers modes de mise en oeuvre de l'invention, les moyens suivants pris isolément ou selon toutes les combinaisons techniquement possibles sont employés :
- le système d'allumage à préchambre est une bougie à préchambre disposée dans un alésage de bougie de la culasse du moteur,
- la bougie à préchambre ne nécessite pas de modification du diamètre d'alésage de bougie pour montage,
- la tête de préchambre est sensiblement hémisphérique avec un centre, l'orientation (ou les orientations) de passage(s) ayant un (des) axe(s) porté(s) par une (des) droite(s) passant par le centre et le (les) jet(s) suivant sensiblement un (des) axe(s) porté(s) par une (des) droite(s) passant par le centre et le (les) passage(s),

(En d'autres termes, l'axe de chaque passage est sensiblement perpendiculaire au plan tangent au débouché dans la chambre en surface de tête du passage considéré.)
- en considérant comme élément de référence une droite de projection pour la définition de la zone de tête de piston n'étant pas sur les axes des jets (un angle solide) et, par complément, la zone de la tête de piston pouvant être sur les axes des jets :
   - le (ou les) passage(s) est (sont) disposé(s) et orienté(s) en outre de telle sorte qu'un (ou des) jet(s) de flamme et/ou de composés instables issu(s) du (ou des) passages lors de la combustion du mélange combustible dans la préchambre vers la tête du moyen de compression ai(en)t un libre parcours minimum dans la chambre, ledit libre parcours minimum étant supérieur à la distance (d) minimale séparant la surface extérieure de tête de préchambre et la surface de tête de piston, de telle manière qu'en considérant le point O d'intersection du plan général de la tête du piston et d'une droite de projection perpendiculaire passant par le centre C de la tête de préchambre, la courbe des points B en périphérie du piston, et la courbe des points A en surface du piston des droites CA de libre parcours minimum, on ait le long de toute droite 0B du plan de la tête du piston un rapport OA=F x OB compris entre : OA=Fmin x OB et OA=Fmax x OB, (Le terme libre parcours, signifie un parcours sans rencontrer une des parois de la chambre ce parcours correspond à la distance séparant la tête de préchambre et la paroi notamment piston, considérée le long d'un axe de passage, dans la suite, par raison de commodité d'explication et de convention d'écriture, on mettra l'origine au centre de la tête de préchambre, on peut cependant considérer comme origine la sortie du passage correspondant),
      - dans des alternatives :
         - Fmin=0,1 et Fmax=0,4 soit OA compris entre 0,1xOB et 0,4xOB,
         - de préférence Fmin=0,15 et Fmax=0,3 soit OA compris entre 0,15xOB et 0,3xOB,

(En d'autres termes, il existe une zone de surface de la tête de préchambre vers le point le plus proche du moyen de compression, le piston, qui est sans passage et cette zone est définie par la distance OA, en tout point A de la courbe de bordure de cette zone, qui est au minimum OA=Fmin x OB et au maximum OA=Fmax x OB, la zone de surface de tête de piston limité par la courbe des points A et comprenant le point 0 est donc une zone n'interceptant pas les axes de jets et la zone de surface de tête de piston limitée par la courbe des points A intérieurement et la courbe des points B extérieurement est donc une zone pouvant intercepter des axes de jets.)
- en considérant comme élément de référence une droite correspondant à l'axe principal du système d'allumage à préchambre pour la définition de la zone de tête de piston n'étant pas sur les axes des jets (un angle solide) et, par complément, la zone de la tête de piston pouvant être sur les axes des jets :
   - le (ou les) passage(s) est (sont) disposé(s) et orienté(s) en outre de telle sorte qu'un (ou des) jet(s) de flamme et/ou de composés instables issu(s) du (ou des) passages lors de la combustion du mélange combustible dans la préchambre vers la tête du moyen de compression ai(en)t un libre parcours minimum dans la chambre, ledit libre parcours minimum étant supérieur à une distance prédéfinie, de telle manière qu'en considérant le point O' d'intersection du plan général de la tête du piston et d'une droite correspondant à l'axe principal du système d'allumage à préchambre et passant par le centre C de la tête de préchambre, la courbe des points B en périphérie du piston, et la courbe des points A' en surface du piston des droites CA' de libre parcours minimum, on ait le long de toute droite 0'B du plan de la tête du piston un rapport O'A'=F' x O'B compris entre O'A'=F'min x O'B et O'A'=F'max x O'B,
      - dans des alternatives :
         - F'min=0,1 et F'max=0,4 soit O'A' compris entre 0,1xO'B et 0,4xO'B,
         - de préférence F'min=0,15 et F'max=0,3 soit O'A' compris entre 0,15xO'B et 0,3xO'B,

(En d'autres termes, il existe une zone de surface de la tête de préchambre vers le point le plus proche du moyen de compression, le piston, qui est sans passage et cette zone est définie par la distance O'A', en tout point A' de la courbe de bordure de cette zone, qui est au minimum O'A'=F'min x O'B et au maximum O'A'=F'max x O'B ; la zone de surface de tête de piston limité par la courbe des points A' et comprenant le point 0' est donc une zone n'interceptant pas les axes de jets et la zone de surface de tête de piston limitée par la courbe des points A' intérieurement et la courbe des points B extérieurement est donc une zone pouvant intercepter des axes de jets.)
- le (ou les) passage(s) est (sont) disposé(s) et orienté(s) en outre de telle sorte qu'un (ou des) jet(s) de flamme et/ou de composés instables issu(s) du (ou des) passages lors de la combustion du mélange combustible dans la préchambre vers la tête du piston ai(en)t un temps minimum de libre parcours dans la chambre, une zone de surface de la tête de préchambre vers le point le plus proche du moyen de compression étant sans passage,
- tous les passages ont un diamètre ≤ 1 mm, de préférence compris entre 0,5 mm et 1 mm,
- tous les passages ont un diamètre supérieur à 1 mm, de préférence de plus de 1 mm à 3mm et mieux de plus de 1 mm à 1,5mm,
- la tête de préchambre comprend au moins un passage ayant un diamètre supérieur à 1 mm jusqu'à 3mm, de préférence jusqu'à 1,5mm, et au moins un passage ayant un diamètre de 1 mm ou moins, de préférence de 0,5 à 1 mm,
- la tête de préchambre comprend 1 à 5 passages de diamètre supérieur à 1 mm, de préférence 1,
- la tête de préchambre comprend 1 à 20 passages de diamètre égal ou inférieur à 1 mm, de préférence 3 à 15,
- le corps de préchambre est en un alliage métallique ayant une conductivité thermique à 20°C d'au moins 10 W/K/m, de préférence d'au moins 30 W/K/m,
- l'alliage est un alliage de cuivre,
- l'alliage est l'alliage Cu Cr 1 Zr,
- la paroi interne du corps de préchambre et/ou la paroi externe de la tête du corps de préchambre et/ou les parois des passages sont revêtues d'un revêtement réfractaire,
- le revêtement réfractaire est choisi parmi : Al₂O₃, ZrY et TiB₂ ,
- le revêtement réfractaire a une épaisseur de 0,5 à 100 µm, de préférence de 1 à 50 µm.

Dans une réalisation préférée la tête de préchambre est donc une calotte sphérique, par exemple une calotte hémisphérique, et les passages sont orientés suivant des rayons de la calotte sphérique.

Les passages ménagés dans la tête du corps de la préchambre peuvent être soit tous des passages ne permettant pas de propagation d'un front de flamme, c'est-à-dire des passages d'un diamètre ≤ 1mm, généralement de 0,5 à 1 mm, soit tous des passages permettant la propagation d'un front de flamme, c'est-à-dire ayant un diamètre >1mm, généralement de plus de 1mm à 3mm, de préférence de plus de 1 mm à 1,5 mm, soit encore une combinaison des deux types de passage.

Dans le cas d'une combinaison de passages des deux types, le nombre de passages permettant le propagation d'un front de flamme varie de 1 à 5 et est de préférence 1, cependant que le nombre de passages ne permettant pas la propagation d'un front de flamme varie de 1 à 20, de préférence de 3 à 15.

Avec une telle combinaison des deux types de passage, l'allumage du mélange combustible dans la chambre de combustion principale se fait par propagation d'un front de flamme pour un fonctionnement à faible charge (du ralenti ou quart de la charge maximale) et par ensemencement en composés instables et auto-inflammation en masse pour un fonctionnement du moteur à forte charge (supérieure au ¼ de la charge maximale).

De préférence les passages sont de forme cylindrique et ont une longueur ≤ 1 mm.

Les passages peuvent être disposés comme décrits dans la demande de brevet FR 2.810.692.

Le corps de préchambre peut être réalisé en tout matériau approprié, tel que Acier 35 CD4, Inconel, Laiton etc.

Dans une réalisation particulière, le corps de préchambre est réalisé en un alliage métallique ayant une conductivité thermique à 20°C supérieure à 10 W/K/m, de préférence supérieure à 30 W/K/m, et pouvant atteindre 350 W/K/m, en particulier un alliage de cuivre. Un alliage de conductivité thermique élevé approprié est l'alliage CuCrlZr dont la conductivité thermique à 20°C est de 320 W/K/m. Ces alliages de conductivité thermique élevée conviennent tout particulièrement pour les allumeurs à préchambre destinés à être utilisés avec des moteurs à combustion interne fortement suralimentés, c'est-à-dire ayant une Pression Moyenne Effective ≥ 13 bars.

Dans une autre réalisation, la paroi interne du corps de la préchambre et/ou la paroi externe de la tête du corps de préchambre, ainsi que, éventuellement, les parois des passages, sont revêtues d'un revêtement réfractaire, tels que des revêtements en Al₂O₃, ZrY (non forcément stoechiométrique) et TiB₂. L'épaisseur de ces revêtements est généralement comprise entre 0,5 et 100 µm, de préférence 1 à 50 µm.

On augmente ainsi l'efficacité de combustion dans la préchambre et améliore le fonctionnement à faible charge, en particulier dans le cas de moteurs fortement suralimentés.

La suite de la description se réfère aux figures annexées qui représentent, respectivement :
Figure 1, une vue schématique, partiellement en coupe, d'un dispositif d'allumage à préchambre selon l'invention ;
Figure 2, un schéma montrant différents trajets possibles longs (invention) et courts (hors invention) pour les jets issus de passages de la tête du corps de préchambre ;
Figure 3, un schéma montrant les trajets possibles dans le cas général d'un système d'allumage oblique par rapport au moyen de compression.

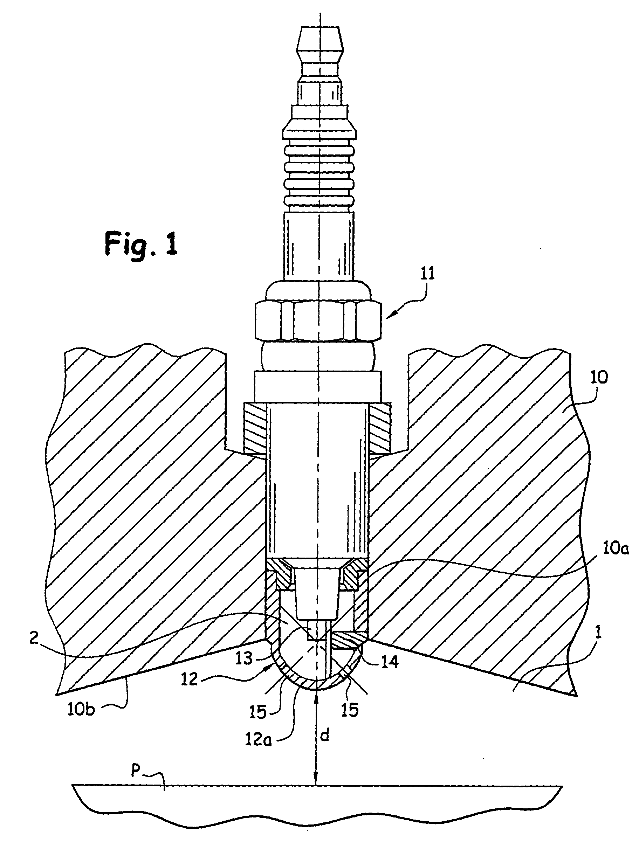

Un cylindre d'un moteur à combustion interne, représenté sur la figure 1, comporte une chambre de combustion principale 1 délimitée par une chemise (non représentée) et fermée supérieurement par une culasse 10. Comme cela est classique, la chambre principale 1 contient un piston P actionné en translation par une bielle (non représentée).

Un allumeur à préchambre 11 selon l'invention est fixé, dans la culasse 10 de manière à être attenant à la chambre principale 1, par exemple par vissage dans un taraudage 10a de la culasse 10.

L'allumeur 11 comporte un corps de préchambre 12, de forme générale tubulaire, comprenant une tête 12a de forme générale convexe, de préférence ayant la forme d'une calotte sphérique, notamment d'une calotte hémisphérique, définissant une préchambre 2.

La tête 12a du corps de préchambre 12 constitue une paroi de séparation entre la chambre de combustion principale 1 et la préchambre 2.

La préchambre peut avoir un volume compris entre 200 et 2000 mm³ et, de préférence, compris entre 500 et 1500 mm³.

Typiquement, la préchambre 2 a un volume inférieur à 1,5 cm³, généralement compris entre 0,5 cm³ et 1,5 cm³. En général, le rapport entre le volume de la préchambre 2 et le volume mort de la chambre principale 1 varie entre 0,1 et 5%, de préférence entre 0,1 et 2%.

Facultativement l'allumeur 11 peut en outre comporter une arrivée (non représentée) permettant d'alimenter la préchambre 2 en un mélange combustible constitué en amont ou d'introduire du carburant, l'air étant mélangé au carburant dans la préchambre 2.

La préchambre 2 est munie d'un système d'allumage comprenant une électrode centrale 13 et une électrode de masse 14.

La tête 12a constituant la paroi de séparation entre la chambre principale 1 et la préchambre 2 est pourvue de passages 15.

Les passages 15, en général de forme cylindrique et de longueur inférieure à 1 mm sont de préférence orientés selon des rayons de la tête hémisphérique 12a.

Selon l'invention, les passages 15 sont orientés de telle sorte que la distance de parcours de jets (flammes et/ou composés instables) issus des passages 15 lors de la combustion du mélange combustible dans la préchambre 2, avant impact sur la surface supérieure du piston P et/ou la paroi interne 10b de la culasse 10, supérieur d'un facteur prédéterminé à la distance d minimale entre le piston P et la tête 12a du corps de préchambre 12, de préférence le facteur est supérieur à 1 et dépend des dispositions respectives entre la bougie à tête de préchambre et le piston ainsi que des dimensions du piston, notamment, son diamètre.

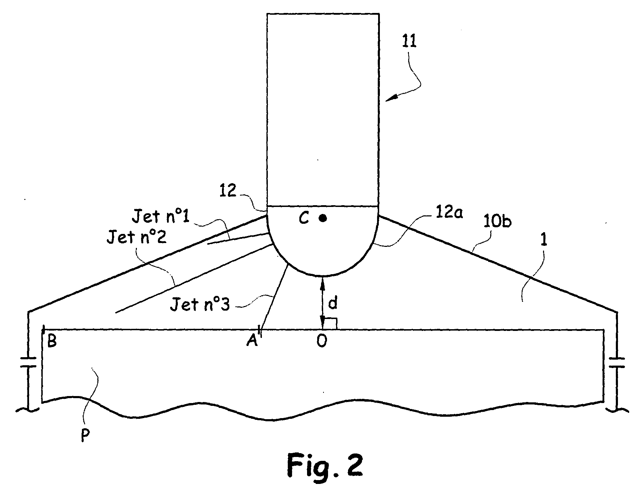

Ainsi, en se référant à la figure 2 les passages conduisant aux jets n°1 et 3 sont à proscrire cependant que le passage conduisant au jet n°2 assure un long parcours avant impact selon l'invention. Sur cette même Figure, on a représenté la droite d de référence passant par le centre C et perpendiculaire en O au plan général du moyen de compression. Les points A et B correspondent à des points des courbes délimitant les zones avec et sans jets selon l'invention. Ces courbes sont fermées et la zone sans jet est un angle solide d'origine C et passant par la courbe des points A. La zone pouvant recevoir les jets est comprise entre extérieurement la courbe des points B et intérieurement la courbe des points A.

Comme on l'a indiqué, les jets ne doivent pas être dirigés vers le toit de culasse. Diverses configurations de toit de culasse existant.

Il existe des chambres de combustion avec un angle de toit assez faible et un bossage sur le piston. Cette forme de chambre de combustion est caractéristique d'un cas de moteur pour lequel l'on souhaite assurer un rapport volumétrique élevé et une bonne perméabilité culasse. Dans ce cas de forme de chambre de combustion, la distance entre l'extrémité de l'allumeur (cas bougie classique : électrode de masse, cas bougie à préchambre : extrémité du corps de préchambre) peut être réduite au minimum admissible.

La distance minimale admissible entre le piston et l'enveloppe extérieure du corps de préchambre est en général de 1 mm. Cette valeur constitue une garde classiquement adoptée en conception par exemple pour éviter le contact piston-sou pape.

On doit également éviter un impact trop direct des jets issus de la préchambre avec le piston et/ou les parois de la chambre de combustion, il est alors définit une zone préférentielle d'intersection des jets issus de la préchambre. Les conduits usinés dans la tête de préchambre sont choisis de manière à avoir une intersection de l'axe de conduits avec le plan du moyen de compression dans la zone préférentielle et selon la définition qui en a été donnée.

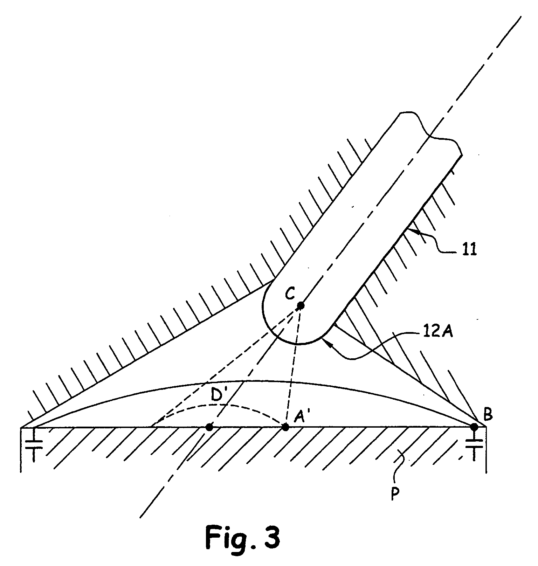

On a vu que cette définition pouvait être différente en fonction de l'élément de référence, soit une droite de projection passant par le centre de la préchambre et arrivant perpendiculairement sur le plan général du moyen de compression, soit une droite correspondant à l'axe principal du système d'allumage et passant par le centre de la préchambre. Ces alternatives peuvent être considérées selon la disposition des éléments du moteur et, notamment l'orientation de l'axe principal du moyen d'allumage par rapport au plan général du moyen de compression. Par exemple dans le cas où ces deux éléments sont perpendiculaires entre eux, on prendra préférentiellement une valeur F' comprise entre F'min=0,15 et F'max=0,3 et dans les autres cas, le système d'allumage ayant un axe oblique par rapport au plan général du moyen de compression on prendra une valeur F' comprise entre F'min=0,1 et F'max=0,4. Sur la Figure 3 on a représenté en perspective la disposition de ces références de calcul, la culasse et le piston P avec des segments latéraux sont vus en tranche et la surface de tête de piston vue en perspective avec la courbe des points A' délimitant une zone de surface de tête de piston sans jet englobant le point O', et avec la courbe des points B correspondant à la périphérie du piston. De préférence, on détermine ces zones en considérant le moyen de compression au plus proche du système d'allumage à préchambre.

En pratique, les jets les plus extrêmes sont dirigés vers la périphérie (courbe des points B), du moyen de compression et les jets les plus internes permettent de laisser une zone de surface du moyen de compression, la plus proche de la tête de préchambre, libre d'impact de jets.

La disposition particulière des passages permet d'obtenir un effet d'inflammation du mélange combustible en masse sous un volume le plus grand possible ou tendant vers une valeur élevée, par les jets, soit de composés instables, soit de fronts de flamme passant par ces passages et orientés par eux, et, ceci, avant qu'ils n'atteignent une paroi (tête de piston notamment). De préférence, on dispose les passages de façon à ce qu'en plus de l'effet volumique tendant à la recherche d'une inflammation d'un volume élevé de mélange combustible, l'effet d'impact sur la tête de piston des jets soit sensiblement homogène, c'est-à-dire répartis de manière à éviter des sollicitations particulièrement asymétriques ou trop localisées. Dans une variante, on peut mettre en oeuvre des passages de diamètre différents en fonction de leur localisation afin d'obtenir des vitesses de jets différentes selon la région de volume à enflammer : par exemple, on choisira en particulier une vitesse de jet plus importante dans une direction où le libre parcours du jet est élevé et, inversement, une vitesse faible dans une direction où le libre parcours du jet est faible. De même, il peut être intéressant dans les zones à passages pour vitesse de jet élevée d'associer des passages à vitesse de jet réduite afin d'améliorer l'inflammation dans les zones les plus proches de la tête qui sont parcourues rapidement par les jets à une vitesse encore élevée. Il est même possible de modéliser sur informatique la cinétique d'inflammation, par exemple la vitesse du jet décroissant plus on s'éloigne, et de mettre en oeuvre un programme d'optimisation de répartition des passages, et, éventuellement en diamètre, en fonction d'une ou des conditions d'effet de volume et/ou d'impact précédemment indiquées.

## Revendications

1. Dispositif d'allumage à préchambre pour moteur à combustion interne comportant :
- une chambre de combustion principale (1) définie en partie par une paroi interne de culasse (10) avec un toit (10b) de culasse et munie d'un système de compression (P) d'un mélange combustible principal à type de piston avec une tête de piston, le système de compression (P) étant mobile dans la culasse et la tête du piston étant sensiblement à l'opposé du toit de culasse;
- un système d'allumage (13, 14) à étincelles comportant à son extrémité d'allumage une préchambre et destiné à l'allumage d'un mélange combustible contenu dans la préchambre (2);
- le système d'allumage à préchambre (2) étant disposé sur le toit de la culasse et destiné à recevoir du mélange combustible, la préchambre étant définie par un corps de préchambre (12) comportant une tête (12a) de préchambre séparant la préchambre (2) de la chambre de combustion principale (1 ) et communiquant avec la chambre de combustion principale par au moins un passage (15) ménagé dans la tête de préchambre;
**caractérisé en ce que** le (ou les) passage(s) (15) est (sont) disposé(s) et orienté(s) dans la tête (12a) de préchambre de telle sorte qu'un (ou des) jet(s) de flamme et/ou de composés instables issu(s) du (ou des) passages (15) lors de la combustion du mélange combustible dans la préchambre (2) soient dirigé(s) dans une zone de l'espace de la chambre tel que le (les) jet(s) n'atteigne pas directement le toit (10b) de culasse et qu'il(s) ait(aient) une (des) longueur(s) de parcours libre supérieur à la distance minimale entre la tête de piston et la tête de préchambre, une zone de surface de la tête de préchambre vers le point le plus proche du moyen de compression étant sans passage, dans le cas d'une tête (12a) de préchambre sensiblement hémisphérique avec un centre et dont l'orientation (ou les orientations) de passage(s) est (sont) sur un (des) axe(s) porté(s) par une (des) droite(s) passant par le centre, le (les) jet(s) suivant sensiblement un (des) axe(s) porté(s) par une (des) droite(s) passant par le centre et le (les) passage(s), ladite zone de l'espace étant délimitée extérieurement par un premier angle solide de sommet au centre de la préchambre et ayant une base dont la périphérie correspond à la périphérie de la tête de piston et, intérieurement, par un second angle solide inclus dans le premier angle solide et de même sommet et dont le rayon de base est compris entre 0,1 et 0,4 fois le rayon de base du premier angle solide.

2. Dispositif selon la revendication 1 **caractérisé en ce que** le (ou les) passage(s) (15) est (sont) disposé(s) et orienté(s) en outre de telle sorte qu'un (ou des) jet(s) de flamme et/ou de composés instables issu(s) du (ou des) passages (15) lors de la combustion du mélange combustible dans la préchambre (2) vers la tête du moyen de compression ai(en)t un libre parcours minimum dans la chambre, ledit libre parcours minimum étant supérieur à une distance prédéfinie, de telle manière qu'en considérant le point O' d'intersection du plan général de la tête du piston et d'une droite correspondant à l'axe général du système d'allumage à préchambre et passant par le centre C de la tête de préchambre, la courbe des points B en périphérie du piston, et la courbe des points A' en surface du piston des droites CA' de libre parcours minimum, on ait le long de toute droite 0'B du plan de la tête du piston un rapport O'A'=F' x O'B compris entre O'A'=F'min x O'B et O'A'=F'max x O'B, avec F'min=0,1 et F'max=0,4 soit O'A' compris entre 0,1xO'B et 0,4xO'B.

3. Dispositif selon la revendication 1, **caractérisé en ce que** le (ou les) passage(s) (15) est (sont) disposé(s) et orienté(s) en outre de telle sorte qu'un (ou des) jet(s) de flamme et/ou de composés instables issu(s) du (ou des) passages lors de la combustion du mélange combustible dans la préchambre vers la tête du moyen de compression ai(en)t un libre parcours minimum dans la chambre, ledit libre parcours minimum étant supérieur à la distance (d) minimale séparant la surface extérieure de tête de préchambre et la surface de tête de piston, de telle manière qu'en considérant le point O d'intersection du plan général de la tête du piston et d'une droite de projection perpendiculaire passant par le centre C de la tête de préchambre, la courbe des points B en périphérie du piston, et la courbe des points A en surface du piston des droites CA de libre parcours minimum, on ait le long de toute droite 0B du plan de la tête du piston un rapport OA=F x OB compris entre : OA=Fmin x OB et OA=Fmax x OB, avec Fmin=0,1 et Fmax=0,4 soit OA compris entre 0,1xOB et 0,4xOB.

4. Dispositif selon l'une des revendications 2 ou 3 **caractérisé en ce que** respectivement et de préférence F'min et Fmin sont égaux à 0,15 d'une part et F'max et Fmax sont égaux à 0,3 d'autre part.

5. Dispositif selon l'une quelconque des revendications précédentes **caractérisé en ce que** tous les passages (15) ont un diamètre ≤ 1 mm, de préférence compris entre 0,5 mm et 1 mm.

6. Dispositif selon l'une quelconque des revendications 1 à 4 **caractérisé en ce que** tous les passages (15) ont un diamètre supérieur à 1 mm, de préférence de plus de 1 mm à 3mm et mieux de plus de 1mm à 1,5mm.

7. Dispositif selon l'une quelconque des revendications 1 à 4 **caractérisé en ce que** la tête de préchambre comprend au moins un passage (15) ayant un diamètre supérieur à 1 mm jusqu'à 3mm, de préférence jusqu'à 1,5mm, et au moins un passage (15) ayant un diamètre de 1 mm ou moins, de préférence de 0,5 à 1 mm.

8. Dispositif selon la revendication 7, **caractérisé en ce que** la tête de préchambre (12a) comprend 1 à 5 passages (15) de diamètre supérieur à 1 mm, de préférence 1.

9. Dispositif selon la revendication 7 ou 8, **caractérisé en ce que** la tête de préchambre (12a) comprend 1 à 20 passages (15) de diamètre égal ou inférieur à 1 mm, de préférence 3 à 15.

10. Dispositif selon l'une quelconque des revendications précédentes, **caractérisé en ce que** le corps de préchambre (12) est en un alliage métallique ayant une conductivité thermique à 20°C d'au moins 10 W/K/m, de préférence d'au moins 30 W/K/m.

11. Dispositif selon la revendication 10, **caractérisé en ce que** l'alliage est un alliage de cuivre.

12. Dispositif selon la revendication 11, **caractérisé en ce que** l'alliage est l'alliage Cu Cr 1 Zr.

13. Dispositif selon l'une quelconque des revendications 1 à 9, **caractérisé en ce que** la paroi interne du corps de préchambre (12) et/ou la paroi externe de la tête (12a) du corps de préchambre (12) et/ou les parois des passages (15) sont revêtues d'un revêtement réfractaire.

14. Dispositif selon la revendication 13, **caractérisé en ce que** le revêtement réfractaire est choisi parmi : Al₂O₃, ZrY et TiB₂.

15. Dispositif selon la revendication 13 ou 14, **caractérisé en ce que** le revêtement réfractaire a une épaisseur de 0,5 à 100 µm, de préférence de 1 à 50 µm.
